# DEMANDE DE BREVET EUROPEEN

(11) **EP 0 721 874 A1**
(43) Date de publication de la demande: **17.07.1996**
(21) Numéro de dépôt: 96400032.7
(22) Date de dépôt: 05.01.1996
(51) Int. Cl.: B62D 1/16, B60R 25/02

(54) **Corps de colonne de direction notamment de véhicule et ensemble de colonne comportant un tel corps**

(30) Priorité: 12.01.1995 FR 9500318
(71) Demandeur: ECIA - EQUIPEMENTS ET COMPOSANTS POUR L'INDUSTRIE AUTOMOBILE, F-25400 Audincourt (FR)
(72) Inventeur: Salez, Jean-Philippe, F-25700 Valentigney (FR); Courvoisier, Patrick, F-25600 Vieux-Charmont (FR)
(74) Mandataire: Habasque, Etienne Joel Jean-François

(57) **Abrégé**

Ce corps de colonne de direction notamment de véhicule automobile, du type comportant une lumière (2) de passage d'un pêne (3) d'un mécanisme de verrouillage (4) disposé dans un boîtier antivol (5) dont une extrémité est fixée sur le corps (1), est caractérisé en ce que l'extrémité du boîtier antivol fixée sur le corps comporte des languettes (6,7) s'étendant vers l'intérieur de celui-ci, de manière que des portions de celles-ci sont alignées avec des bords de la lumière (2) du corps (1), pour renforcer ce corps au niveau de cette lumière.

## Description

La présente invention concerne un corps de colonne de direction notamment de véhicule automobile, et un ensemble de colonne de direction comportant un tel corps.

On connaît déjà dans l'état de la technique, des corps de colonne de direction de ce type, qui comportent une lumière de passage d'un pêne d'un mécanisme de verrouillage disposé dans un boîtier antivol dont une extrémité est fixée sur le corps.

Cette extrémité du boîtier antivol est par exemple fixée sur le corps par soudage.

Le pêne est adapté pour passer dans la lumière du corps afin de venir coopérer en position de verrouillage avec un manchon antivol fixé sur l'arbre de direction, afin d'immobiliser l'arbre en rotation dans le corps de colonne.

En régle générale dans l'état de la technique, une pièce de structure rigide est interposée entre le manchon antivol et le corps de colonne et est fixée sur celui-ci, pour permettre un renforcement du corps au niveau de la lumière de celui-ci, afin de supporter les couples appliqués sur l'arbre de direction et sur l'ensemble de colonne notamment lors d'une tentative de vol du véhicule.

On conçoit que les ensembles de ce type présentent un certain nombre d'inconvénients, notamment au niveau de leur difficulté de réalisation, de leur poids et de leur coût de fabrication.

Le but de l'invention est donc de résoudre ces problèmes.

A cet effet, l'invention a pour objet un corps de colonne de direction notamment de véhicule automobile, du type comportant une lumière de passage d'un pêne d'un mécanisme de verrouillage disposé dans un boîtier antivol dont une extrémité est fixée sur le corps, caractérisé en ce que l'extrémité du boîtier antivol fixée sur le corps comporte des languettes venues de matière avec le reste du boîtier et s'étendant vers l'intérieur de celui-ci, de manière que des portions de celles-ci sont alignées avec des bords de la lumière du corps pour renforcer ce corps au niveau de cette lumière.

Avantageusement, les languettes sont découpées dans l'extrémité correspondantes du boîtier antivol et déformées vers l'intérieur de celui-ci.

Selon un autre aspect, l'invention a également pour objet un ensemble de colonne de direction notamment pour véhicule automobile, comportant un corps tel que décrit précédemment.

L'invention sera mieux comprise à la lecture de la description qui va suivre, donnée uniquement à titre d'exemple et faite en se référant aux dessins annexés, sur lesquels :

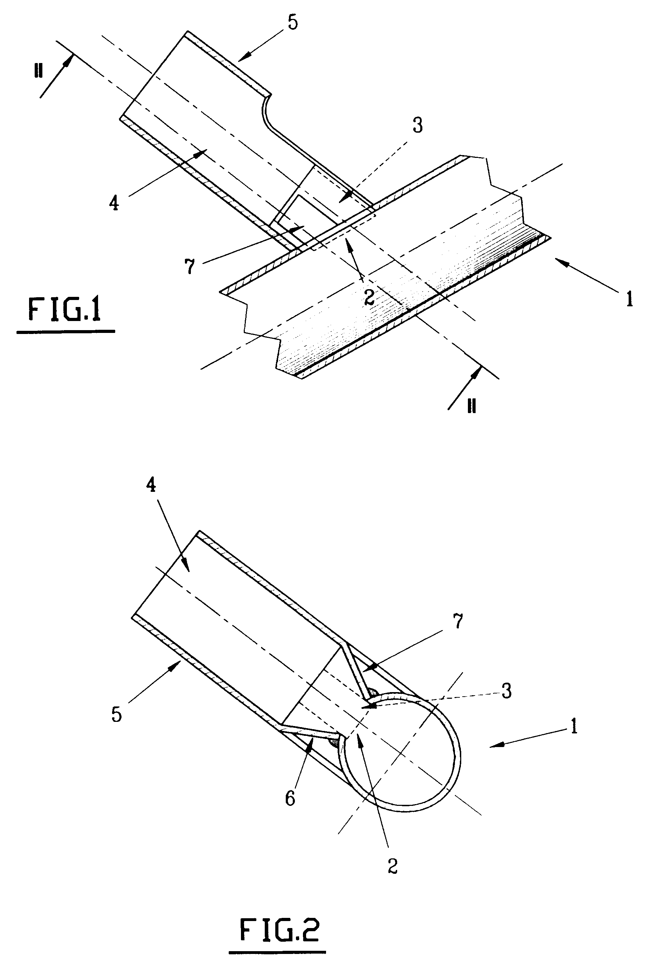

- la Fig.1 représente une vue en coupe d'un corps de colonne de direction selon l'invention; et
- la Fig.2 représente une vue en coupe prise selon la ligne II-II de la figure 1.

On reconnait sur ces figures, un corps de colonne de direction entrant dans la constitution d'un ensemble de colonne de direction notamment pour véhicule automobile, et désigné par la référence générale 1.

Ce corps est adapté pour recevoir un arbre de direction et comporte une lumière 2 de passage d'un pêne 3 d'un mécanisme de verrouillage 4 disposé dans un boîtier antivol 5 dont une extrémité est fixée sur le corps.

De façon classique, cette extrémité du boîtier antivol est par exemple soudée sur le corps.

Selon l'invention, l'extrémité du boîtier antivol fixée sur le corps de colonne comporte des languettes venues de matière avec le reste du boîtier et s'étendant vers l'intérieur de celui-ci, de manière que des portions de celles-ci sont alignées avec des bords par exemple axiaux de la lumière du corps, pour renforcer ce corps au niveau de cette lumière.

C'est ainsi par exemple que dans le mode de réalisation décrit, le boîtier antivol 5 comporte deux languettes symétriques 6 et 7, en regard l'une de l'autre, découpées dans le boîtier et déformées vers l'intérieur de celui-ci, de manière que les extrémités de ces languettes soient alignées avec les bords correspondants de la lumière 2 du corps de colonne.

Avantageusement, ces extrémités de languette sont également soudées sur le corps.

Il va de soi bien entendu que différents modes de réalisation de ces languettes peuvent être envisagés et que celles-ci peuvent par exemple comporter une portion d'extrémité s'étendant parallèlement à l'axe du boîtier antivol pour augmenter la surface de celles-ci alignée avec les bords de la lumière.

On conçoit que ceci permet de renforcer le corps de colonne au niveau de sa lumière 2 pour augmenter les capacités de celui-ci à supporter des couples importants appliqués par exemple sur l'arbre de direction lors d'une tentative de vol du véhicule et de former par exemple des surfaces de guidage du pêne ou d'un autre élément du mécanisme antivol.

## Revendications

1. Corps de colonne de direction notamment de véhicule automobile, du type comportant une lumière (2) de passage d'un pêne (3) d'un mécanisme de verrouillage (4) disposé dans un boîtier antivol (5) dont une extrémité est fixée sur le corps (1), caractérisé en ce que l'extrémité du boîtier antivol fixé sur le corps comporte des languettes (6,7) s'étendant vers l'intérieur de celui-ci, de manière que des portions de celles-ci sont alignées avec des bords de la lumière (2) du corps (1), pour renforcer ce corps au niveau de cette lumière.

2. Corps selon la revendication 1, caractérisé en ce que les languettes (6,7) sont découpées dans le boîtier antivol (5) et déformées dans l'intérieur de celui-ci.

3. Corps selon la revendication 1 ou 2, caractérisé en ce que les extrémités des languettes alignées avec les bords de la lumière (2) du corps sont soudées sur celui-ci.

4. Ensemble de colonne de direction notamment pour véhicule automobile, caractérisé en ce qu'il comporte un corps selon l'une quelconque des revendications précédentes.
